Europäisches Patentamt

European Patent Office

Office européen des brevets

(19)

(11) Veröffentlichungsnummer: **0 353 412 B'**

(12) # EUROPÄISCHE PATENTSCHRIFT

(45) Veröffentlichungstag der Patentschrift:
04.09.91 Patentblatt 91/36

(51) Int. Cl.$^5$: **B60H 1/00**

(21) Anmeldenummer: **89109356.9**

(22) Anmeldetag: **24.05.89**

(54) **Heizungs- und/oder Klimaanlage für ein Kraftfahrzeug.**

(30) Priorität: **30.07.88 DE 3826021**

(43) Veröffentlichungstag der Anmeldung:
**07.02.90 Patentblatt 90/06**

(45) Bekanntmachung des Hinweises auf die
Patenterteilung:
**04.09.91 Patentblatt 91/36**

(84) Benannte Vertragsstaaten:
**DE FR GB IT**

(56) Entgegenhaltungen:
**FR-A- 2 531 666
FR-A- 2 534 194
FR-A- 2 558 131
US-A- 1 643 966**

(73) Patentinhaber: **Dr.Ing.h.c. F. Porsche
Aktiengesellschaft
Porschestrasse 42
W-7000 Stuttgart 40 (DE)**

(72) Erfinder: **Burst, Hermann, Dipl.-Ing.
Telemannstrasse 4
W-7255 Rutesheim (DE)**
Erfinder: **Düwel, Klaus-Roger, Dipl.-Ing.
Eschenweg 22
W-7142 Marbach (DE)**
Erfinder: **Scheyhing, Ulrich, Dipl.-Ing.
Baacher Haupstrasse 44
W-7057 Winnenden (DE)**
Erfinder: **Pross, Walter, Dipl.-Ing. FH
Parkstrasse 23
W-7032 Sindelfingen (DE)**
Erfinder: **Petri, Horst, Dipl.-Ing. FH
Kelterstrasse 10
W-7251 Hemmingen (DE)**

## Beschreibung

Die Erfindung bezieht sich auf eine Heizungs- und/oder Klimaanlage für ein Kraftfahrzeug gemäß dem Oberbegriff des Anspruchs 1.

Aus der DE-A 3619935 geht eine Heizungs- und/oder Klimaanlage für ein Kraftfahrzeug hervor, bei der ein erster aufbauseitig ausgebildeter Wasserablauf für das durch den Zuströmkanal der Frischluft eintretende Regen- bzw. Waschwasser und ein zweiter, gehäuseseitiger Wasserablauf zum Abführen des im Bereich des Verdampfers anfallende Kondenswasser vorgesehen ist.

Dieser Anordnung haftet der Nachteil an, daß für den Regen- bzw. Waschwasserablauf aufbauseitig umfangreiche Maßnahmen getroffen werden müssen (separater Wasserkasten unterhalb der Windschutzscheibe mit einem Wasserabweiser), die erhebliche Kosten verursachen. Außerdem beansprucht der Regen- bzw. Waschwasserablauf einen beträchtlichen Bauraum im Bereich der Stirnwand eines Kraftfahrzeuges.

Aufgabe der Erfindung ist es, an einer Heizungs- und/oder Klimaanlage solche Vorkehrungen zu treffen, daß bei guter Funktion und platzsparender Anordnung die Herstellungskosten für die beiden Wasserabläufe reduziert werden.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Integration der beiden getrennten Abläufe in das Gehäuse der Heizungs- und/oder Klimaanlage der erforderliche Bauraum einer Heizungs- und/oder Klimaanlage wesentlich verringert wird und zugleich die Herstellkosten beträchtlich gesenkt werden, da der aufbauseitige Wasserkasten entfallen kann. Aufwendige Schweiß- und Abdichtarbeiten im Bereich des Vorderwagens können somit eingespart werden. Durch die räumlich getrennte Anordnung beider Abläufe erfolgt eine Vorabscheidung des in das Gehäuse der Heizungs- und/oder Klimaanlage eintretenden Regen- bzw. Waschwassers. Dies wird zu einem großen Teil vor dem Verdampfer aufgefangen und ins Freie abgeleitet, so daß keine Wassertropfen in den Innenraum des Fahrzeuges gelangen können. Das am freien Ende des Ablaufes für das Kondenswasser angeordnete Rückschlagventil bewirkt, daß trotz saugseitiger Anordnung dieses Ablaufes das angesammelte Kondenswasser bei einer bestimmten Wassersäule nach unten hin ins Freie abfließen kann.

Ein Ausführungsbeispiel der Erfindung ist in der Zeichnung dargestellt und wird im folgenden näher erläutert.

Es zeigt

Fig. 1     eine Seitenansicht eines Personenwagens mit einer Heizungs- und/oder Klimaanlage,
Fig. 2     einen Ausschnitt X der Fig. 1 in größerem Maßstab,

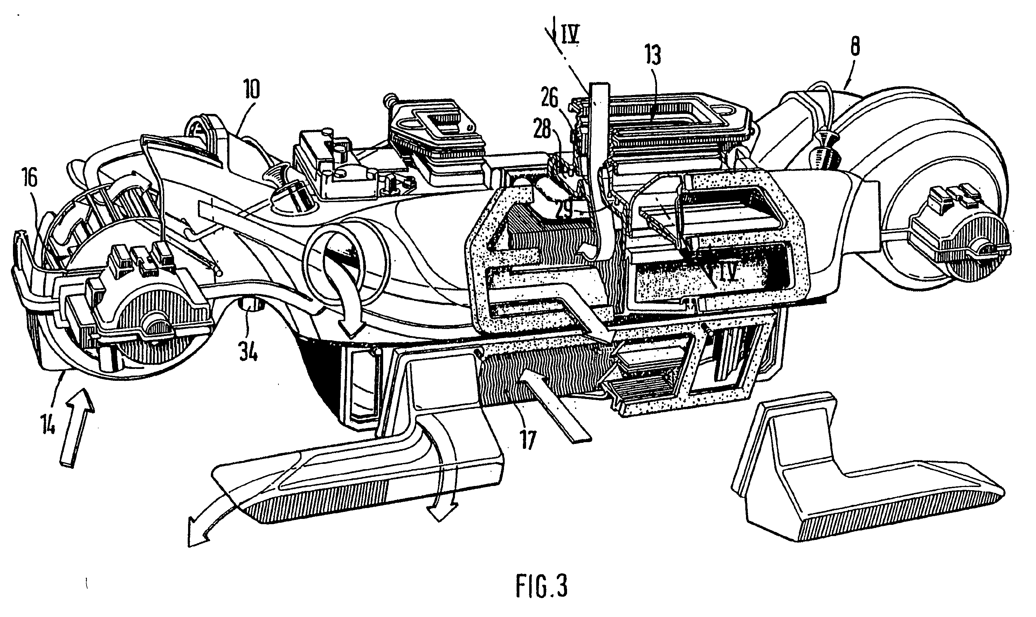

Fig. 3     eine Schrägansicht auf das Gehäuse der Heizungs- und/oder Klimaanlage, teilweise im Schnitt,
Fig. 4     einen Schnitt nach der Linie IV-IV der Fig. 3 mit den beiden Abläufen für das Regen- bzw. Waschwasser und für das Kondenswasser,
Fig. 5     eine Teilansicht in Pfeilrichtung R der Fig. 4.

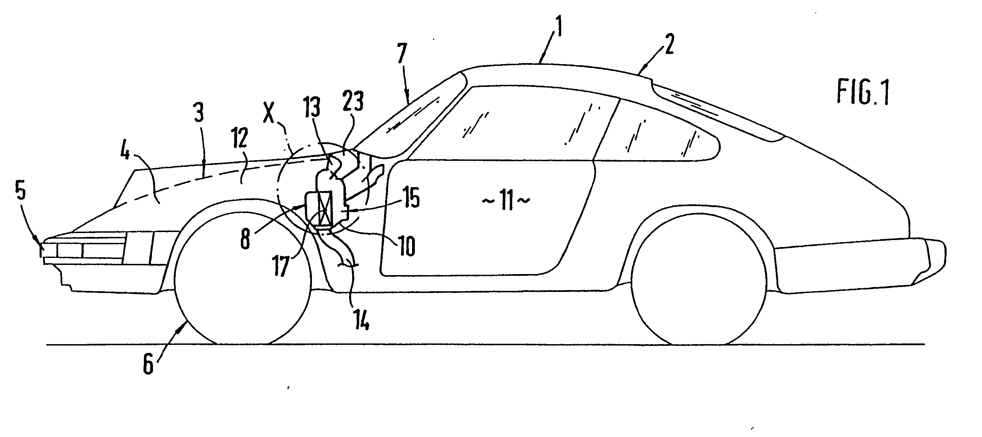

Ein Kraftfahrzeug (Personenwagen) 1 mit einem nicht näher dargestellten, luftgekühlten Heckmotor weist einen Aufbau 2 auf, der sich im Bugbereich aus einer Fronthaube 3, seitlichen Kotflügeln 4, einem Stoßfänger 5, Rädern 6 und einer Windschutzscheibe 7 zusammensetzt. Gemäß Fig. 1 ist das Kraftfahrzeug mit einer Heizungs- und/oder Klimaanlage 8 versehen, die ein an einer aufbauseitig angeordneten Querwand 9 befestigtes Gehäuse 10 umfaßt. Die Querwand 9 trennt einen Fahrgastraum 11 von einem unterhalb der Fronthaube 3 liegenden Stau- bzw. Aggregateraum 12.

Das Gehäuse 10 umfaßt Zuströmkanäle 13, 14, 15 für Frischluft, Warmluft und Umluft bzw. gekühlte Luft sowie mehrere, nicht näher dargestellte Ausgangskanäle, die die mittels eines Gebläses 16 innerhalb des Gehäuses 10 vermischte Luft in den Fußraum, zur Mitteldüse, zur Entfrosterdüse und zu den Seitendüsen leiten. Der Zuströmkanal 14 ist der Warmluft und der Zuströmkanal 15 der Umluft bzw. der gekühlten Luft zugeordnet.

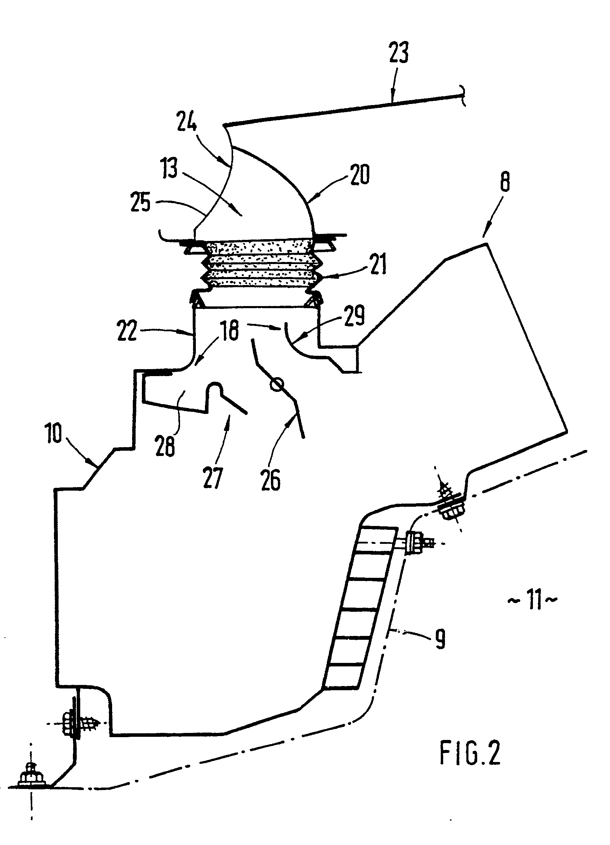

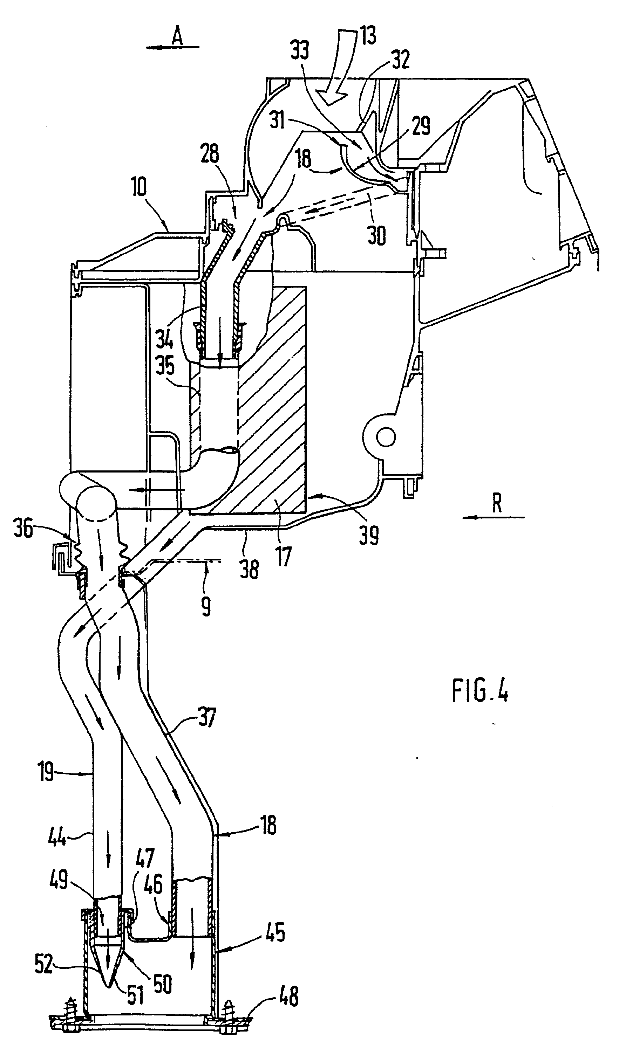

Ferner ist innerhalb des Gehäuses 10 ein Verdampfer 17 angeordnet. Erfindungsgemäß ist in das Gehäuse 10 zumindest abschnittsweise ein erster Wasserablauf 18 für das durch den Zuströmkanal 13 für die Frischluft einströmende Regen- bzw. Waschwasser und ein zweiter Wasserablauf 19 für das im Bereich des Verdampfers 17 anfallende Kondenswasser integriert, wobei beide Wasserabläufe 18, 19 getrennt voneinander am Gehäuse 10 ausgebildet sind (Fig. 2 und 4).

Der erste Ablauf 18 für das Regen- bzw. Waschwasser ist unmittelbar an den Zuströmkanal 13 für die Frischluft angeschlossen. Der Zuströmkanal 13 für die Frischluft wird durch eine aufbauseitige Hutze 20 gebildet, die über einen flexiblen Balg 21 mit einem darunterliegenden Anschlußstutzen 22 des Gehäuses 10 verbunden ist. Die Hutze 20 ist an einem, am unteren querverlaufenden Rand der Windschutzscheibe 7 angeordneten Windlaufblech 23 ausgebildet und weist an der der Fronthaube 3 zugekehrten Seite eine etwa aufrecht verlaufende Eintrittsöffnung 24 auf, die mit einem luftdurchlässigen Gitter 25 verkleidet ist (Fig. 2). Die Eintrittsöffnung 24 ist etwa rechteckförmig ausgebildet. Der ebenfalls rechteckförmige, aufrecht verlaufende Balg 21 ist an das untere Ende der Hutze 20 und an das obere Ende des Anschlußstutzens 22 lösbar angeschlossen. Unterhalb bzw. benachbart des Anschlußstutzens 22 ist eine mit einem Stellmotor zusammenwirkende Frischluftklappe 26 vorgesehen, mit der die Frischluftzufuhr zum Gehäuse 10 geregelt wird. Die geschlossene Frischluftklappe 26 liegt schräg im Raum und steigt entgegen der Fahrtrichtung A gesehen, nach hinten hin leicht an. Die etwa mittige Drehachse der Frischluftklappe 26 verläuft in Fahrzeugquerrichtung und ist horizontal ausgerichtet. Gemäß Fig. 2 ist die Frischluftklappe 26 von einem rahmenartigen Rinnensystem 27 umgeben. Dieses Rinnensystem 27 besteht aus einer vorderen Querrinne 28, einer hinteren, querverlaufenden Auffangrinne 29 und zwei längsgerichteten, seitlich außenliegenden, etwa U-förmig profilierten Schächten 30. Die Auffangrinne 29 liegt etwas höher als die vordere Querrinne 28. Ein freies Ende 31 der Auffangrinne 29 ist zu einer Führungslippe 32 des Gehäuses 10 hochgezogen, dergestalt, daß das freie Ende 31 die Führungslippe 32 in Fahrtrichtung A gesehen, abschnittsweise übergreift. Zwischen Führungslippe 32 und Auffangrinne entsteht ein Spalt 33 (Fig. 4).

Bei geschlossener Frischluftklappe 26 fließt das einströmende Regen- bzw. Waschwasser teilweise auf die Frischluftklappe 26 und wird von dort in die vordere Querrinne 28 abgeleitet. Die beiden längsgerichteten Schächte 30 sind etwa parallel zur schrägverlaufenden, geschlossenen Klappe 26 ausgerichtet.

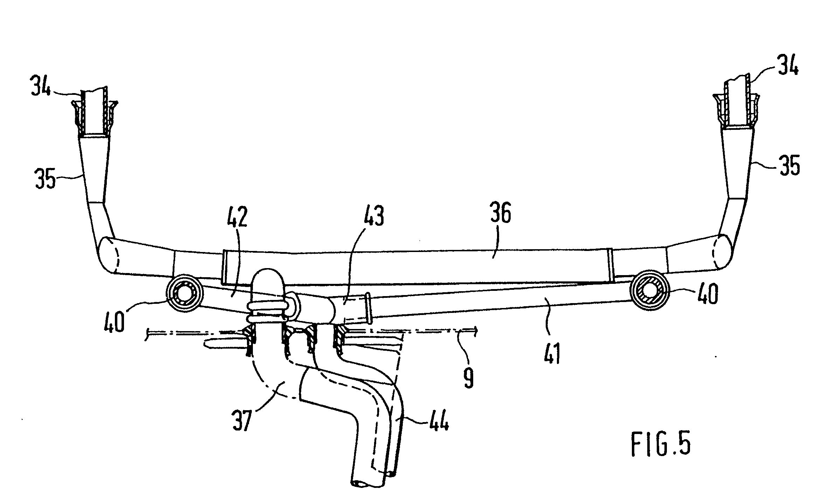

Im Zusammenführungsbereich der beiden Schächte 30 mit der vorderen Querrinne 28 ist jeweils ein aufrechter, nach unten hin ragender Ablaufstutzen 34 angeformt, an den außerhalb des Gehäuses 10 vertikale Rohrabschnitte 35 angeschlossen sind (Fig. 5). Die beiden Rohrabschnitte 35 sind über eine gemeinsame T-förmige Gummitülle 36 mit einem zentralen, aufrechten Ablaufschlauch 37 verbunden. Die Gummitülle 36 ist in nicht näher dargestellter Weise in eine Öffnung der Querwand 9 eingeknöpft und wird somit aufbauseitig fixiert. Die vordere Querrinne 28 und die hintere Querrinne 29 sowie die Schächte 30 erstrecken sich oberhalb des Verdampfers 17. Die vordere Querrinne 28 und die hintere Auffangrinne 29 sind — in Querrichtung gesehen — nach außen hin abfallend ausgebildet, so daß das eintretende Regen- bzw. Waschwasser selbsttätig zu den außenliegenden Ablaufstutzen 35 fließt.

Der zweite Ablauf 19 am Gehäuse 10 ist benachbart dem unteren Bereich des Verdampfers 17 vorgesehen. Hierzu ist unterhalb des Verdampfers 17 am Gehäuseboden 38 eine rinnenförmige Aufnahme 39 mit zwei seitlich außenliegenden, rohrförmigen Abflußstutzen 40 ausgebildet. An diese, etwa horizontal ausgerichtete Abflußstutzen 40 sind außerhalb des Gehäuses 10 querverlaufende, schräge Rohre 41, 42 angeschlossen, die über ein gemeinsames, T-förmiges Zwischenstück 43 aus Gummi in ein weiteres, zentrales Ablaufrohr 44 einmünden (Fig. 5). Das Zwischenstück 43 ist ebenfalls in nicht näher dargestellter Weise in eine Öffnung der Querwand 9 eingeknöpft und somit aufbauseitig in Lage gehalten.

Beide zentralen Ablaufrohre 37, 44 sind nach unten zur Fahrbahn hin gerichtet, wobei die freien Enden der beiden Ablaufrohre 37, 44 in einen gemeinsamen Kunststoffbehälter 45 eingesteckt sind. Der Kunststoffbehälter 45 ist nach unten hin offen und weist an seiner Oberseite zwei Stutzen 46, 47 zur Aufnahme der Ablaufrohre 37, 44 auf. Gemäß Fig. 4 ist der Kunststoffbehälter 45 an eine horizontale Bodenwandung 48 des Kraftfahrzeuges angeschraubt. Das freie Ende 49 des zweiten Ablaufrohres 44 wirkt mit einem Rückschlagventil 50 zusammen. Das Rückschlagventil 50 ist unten geschlossen und öffnet sich, wenn die aus der Wassersäule resultierende Kraft die Zuhaltekraft der Dichtlippen 51, 52 übersteigt. Beide Wasserabläufe 18, 19 sind außerhalb des Fahrgastraumes 11 angeordnet, so daß ein Wassereintritt in den Fahrgastraum 11 ausgeschlossen ist. Bei geöffneter Frischluftklappe 26 wird ein Teil des Regen- bzw. Waschwassers bewußt durch das Heizgerät geführt und über den zweiten Ablauf 19 für das Kondenswasser ins Freie abgeleitet. Die außerhalb des Gehäuses 10 angeordneten Rohrabschnitte 35, 41, 42 und die Ablaufrohre 37, 44 beider Abläufe 18, 19 werden vorzugsweise durch geblasene Kunststoffrohre gebildet.

## Patentansprüche

1. Heizungs- und/oder Klimaanlage (8) für ein Kraftfahrzeug (1) mit einem, einen Verdampfer (17) und ein Gebläse (16) enthaltendem Gehäuse (10), einem Zuströmkanal für Frischluft (13), einem ersten Ablauf (18) für das einströmende Regen- bzw. Waschwasser und einem zweiten Ablauf (19) für das im Bereich des Verdampfers (17) anfallende Kondenswasser, wobei die Frischluft über eine benachbart einer Windschutzscheibe (7) angeordnete Eintrittsöffnung (24) in den Zuströmkanal (13) gelangt, dadurch gekennzeichnet, daß beide Abläufe (18, 19) zumindest abschnittsweise in das Gehäuse (10) der Heizungs- und/oder Klimaanlage (8) integriert sind, und zwar getrennt voneinander.

2. Heizungs- und/oder Klimaanlage nach Anspruch 1, dadurch gekennzeichnet, daß der erste Ablauf (18) für das Regen- bzw. Waschwasser abschnittsweise im Bereich des Zuströmkanals (13) für die Frischluft verläuft.

3. Heizungs- und/oder Klimaanlage nach Anspruch 2, dadurch gekennzeichnet, daß der Zuströmkanal (13) für Frischluft durch eine aufbauseitige, benachbart der Eintrittsöffnung angeordnete Hutze (20) gebildet wird, die über einen flexiblen Balg (21) mit einem darunterliegenden Anschlußstutzen (22) des Gehäuses (10) verbunden ist.

4. Heizungs- und/oder Klimaanlage nach den Ansprüchen 1 bis 3, dadurch gekennzeichnet, daß der erste Ablauf (18) unterhalb des Anschlußstutzens (22) des Gehäuses (10) eine in Fahrtrichtung gesehen hintere, querverlaufende Auffangrinne (29) und eine vordere Querrinne (28) umfaßt, wobei die Querrinne (28) und die Auffangrinne (29) in seitlichen, außenliegenden Bereichen über längsverlaufende Schächte (30) miteinander verbunden sind und daß sich zwischen den beiden Rinnen (28, 29) und den Schächten (30) eine Frischluftklappe (26) zum Öffnen und Schließen des Zuströmkanals (13) erstreckt.

5. Heizungs- und/oder Klimaanlage nach Anspruch 4, dadurch gekennzeichnet, daß die hintere Auffangrinne (29) etwas höher liegt als die vordere Querrinne (28).

6. Heizungs- und/oder Klimaanlage nach Anspruch 4, dadurch gekennzeichnet, daß im Zusammenführungsbereich der schräg verlaufenden Schächte (30) mit der vorderen Querrinne (28) jeweils ein aufrechter Ablaufstutzen (34) vorgesehen ist, an dem außerhalb des Gehäuses (10) ein Rohrabschnitt (35) angeschlossen ist, wobei die beiden Rohrabschnitte (35) über eine gemeinsame Gummitülle (36) zu einem zentralen Ablaufrohr (37) zusammengeführt sind.

7. Heizungs- und/oder Klimaanlage nach Anspruch 1, dadurch gekennzeichnet, daß der zweite Ablauf (19) durch eine an einem Gehäuseboden (38) unterhalb des Verdampfers (17) angeordnete, rinnenförmige Aufnahme (39) gebildet wird, wobei die Aufnahme (39) zwei seitlich außenliegende Ablaufstutzen (40) aufweist.

8. Heizungs- und/oder Klimaanlage nach Anspruch 7, dadurch gekennzeichnet, daß an die beiden Abflußstutzen (40) Rohrabschnitte (41, 42) angeschlossen sind, die über ein gemeinsames Zwischenstück (43) mit einem zentralen Ablaufrohr (44) verbunden sind.

9. Heizungs- und/oder Klimaanlage nach Anspruch 1, dadurch gekennzeichnet, daß die untenliegenden, freien Enden der beiden Abläufe (18, 19) in einen gemeinsamen, nach unten hin offenen Kunststoffbehälter (45) einmünden.

10. Heizungs- und/oder Klimaanlage nach Anspruch 1, dadurch gekennzeichnet, daß am freien Ende des in bezug auf das Gebläse (16) saugseitig angeordneten zweiten Ablaufes (19) ein Rückschlagventil (50) vorgesehen ist.

11. Heizungs- und/oder Klimaanlage nach Anspruch 4, dadurch gekennzeichnet, daß sich die hintere Auffangrinne (29) und die vordere Querrinne (28) sowie die längsverlaufenden Schächte (30) oberhalb des Verdampfers (17) erstrecken.

12. Heizungs- und/oder Klimaanlage nach den Ansprüchen 6 und 8, dadurch gekennzeichnet, daß die Rohrabschnitte (35, 41, 42) der beiden Abläufe (18, 19) durch geblasene Kunststoffrohre gebildet werden.

## Claims

1. A heating and/or air-conditioning system (8) for a motor vehicle (1) having a casing (10) comprising a vaporizer (17) and a fan (16), an inflow duct for fresh air (13), a first outlet (18) for the inflowing rain or washing water and a second outlet (19) for the water of condensation formed in the region of the vaporizer (17), the fresh air arriving at the inflow duct (13) by way of an entry opening (24) arranged adjacent to a windscreen (7), characterized in that the two outlets (18, 19) are integrated at least in part into the casing (10) of the heating and/or air-conditioning system (8), *i.e.* separately from each other.

2. A heating and/or air-conditioning system according to Claim 1, characterized in that the first outlet (18) for the rain or washing water extends in part in the region of the inflow duct (13) for the fresh air.

3. A heating and/or air-conditioning system according to Claim 2, characterized in that the inflow duct (13) for fresh air is formed by a scoop (20) formed on the body adjacent to the entry opening and connected by way of a flexible bellows (21) to a connexion socket (22) of the casing (10) lying thereunder.

4. A heating and/or air-conditioning system according to Claim 1 to 3, characterized in that below the connexion socket (22) of the casing (10) the first outlet (18) comprises a transversely extending rear collecting channel (29) — as viewed in the direction of travel — and a front transverse channel (28), the transverse channel (28) and the collecting channel (29) being connected together in lateral outer areas by way of longitudinally extending chutes (30), and a fresh-air flap (26) for opening and closing the inflow duct (13) extends between the two channels (28, 29) and the chutes (30).

5. A heating and/or air-conditioning system according to Claim 4, characterized in that the rear collecting channel (29) lies somewhat higher than the front transverse channel (28).

6. A heating and/or air-conditioning system according to Claim 4, characterized in that an upright outlet socket (34), to which a pipe section (35) is connected outside the casing (10), is provided in each case in the area of the junction of the obliquely extending chutes (30) with the front transverse channel (28), the two pipe sections (35) being joined by way of a common rubber tube member (36) to a central outlet pipe (37).

7. A heating and/or air-conditioning system according to Claim 1, characterized in that the second outlet (19) is formed by a channel-shaped receptacle (39) mounted on the base (38) of the casing below the vaporizer (17), the receptacle (39) comprising two outlet sockets (40) arranged laterally on the outside.

8. A heating and/or air-conditioning system according to Claim 7, characterized in that pipe sections (41, 42), which are connected to a central outlet pipe (44) by way of a common intermediate member (43), are joined to the two outflow sockets (40).

9. A heating and/or air-conditioning system according to Claim 1, characterized in that the free ends — lying below — of the two outlets (18, 19) open into a common tank (45) of plastics material open at the bottom.

10. A heating and/or air-conditioning system according to Claim 1, characterized in that a return valve (50) is provided at the free end of the second outlet (19) arranged at the suction end relative to the fan (16).

11. A heating and/or air-conditioning system according to Claim 4, characterized in that the rear collecting channel (29) and the front transverse channel (28) as well as the longitudinally extending chutes (30) extend above the vaporizer (17).

12. A heating and/or air-conditioning system according to Claim 6 and 8, characterized in that the pipe sections (35, 41, 42) of the two outlets (18, 19) are formed by blow-moulded pipes of plastics material.

## Revendications

1. Installation de chauffage et/ou de climatisation (8) pour un véhicule automobile (1) comportant un boîtier (10) contenant un évaporateur (17) et un ventilateur (16), un canal d'arrivée d'air frais (13), une première sortie (8) pour l'eau de pluie ou l'eau de lavage pénétrant à l'intérieur et une deuxième sortie (19) pour l'eau de condensation se formant dans la région de l'évaporateur (17), l'air frais parvenant dans le canal d'arrivée (13) par un orifice d'entrée (24) placé au voisinage d'un pare-brise (7), caractérisée en ce que les deux sorties (18, 19) sont au moins en partie intégrées dans le boîtier (10) de l'installation de chauffage et/ou de climatisation (8), séparées l'une de l'autre.

2. Installation de chauffage et/ou de climatisation selon la revendication 1, caractérisée en ce que la première sortie (18) pour l'eau de pluie ou l'eau de lavage s'étend en partie dans la région du canal d'arrivée (13) d'air frais.

3. Installation de chauffage et/ou de climatisation selon la revendication 2, caractérisée en ce que le canal d'arrivée (13) d'air frais est formé par une cheminée de prise d'air (20) située côté carrosserie, au voisinage de l'orifice d'entrée, laquelle est reliée à une tubulure de raccord (22) du boîtier (10), placée au-dessous, par un soufflet (21) flexible.

4. Installation de chauffage et/ou de climatisation selon les revendications 1 à 3, caractérisée en ce que la première sortie (18) comporte, au-dessous de la tubulure de raccord (22) du boîtier (10), une rigole de collecte (29) transversale, située à l'arrière vue dans le sens de la marche et une rigole transversale avant (28), la rigole transversale (28) et la rigole de collecte (29) étant reliées entre elles dans des zones latérales situées à l'extérieur, par des gaines longitudinales (30) et en ce qu'un volet d'air frais (26) destiné à ouvrir et à fermer le canal d'arrivée (13), s'étend entre les deux rigoles (28, 29) et les gaines (30).

5. Installation de chauffage et/ou de climatisation selon la revendication 4, caractérisée en ce que la rigole de collecte (29) arrière se situe légèrement plus haut que la rigole transversale avant (28).

6. Installation de chauffage et/ou de climatisation selon la revendication 4, caractérisée en ce que dans la région de jonction des gaines (30) s'étendant obliquement avec la rigole transversale avant (28), il est prévu pour chacune une tubulure de sortie (34) verticale à laquelle est raccordée une partie de tuyau (35), à l'extérieur du boîtier (10), les deux parties de tuyau (35) étant réunies, par un manchon en caoutchouc (36), pour former un tuyau de sortie (37).

7. Installation de chauffage et/ou de climatisation selon la revendication 1, caractérisée en ce que la deuxième sortie est formée par un logement (39) en forme de rigole, placé sur le fond d'enveloppe (38), au-dessous de l'évaporateur (17), le logement (39) comportant deux tubulures de sortie (40) situées latéralement à l'extérieur.

8. Installation de chauffage et/ou de climatisation selon la revendication 7, caractérisée en ce qu'aux deux tubulures de sortie (40) sont raccordées des parties de tuyau (41, 42) qui sont reliées à un tuyau de sortie (44) central, par une pièce intermédiaire (43) commune.

9. Installation de chauffage et/ou de climatisation selon la revendication 1, caractérisée en ce que les extrémités libres situées au-dessous, des deux sorties (18, 19) débouchent dans un réservoir en matière plastique (45) commun, ouvert vers le bas.

10. Installation de chauffage et/ou de climatisation selon la revendication 1, caractérisée en ce qu'il est prévu un clapet de non-retour (50) à l'extrémité libre de la deuxième sortie (19), située côté aspiration par rapport au ventilateur (16).

11. Installation de chauffage et/ou de climatisation selon la revendication 4, caractérisée en ce que la rigole de collecte (29) arrière et la rigole transversale avant (28) ainsi que les gaines longitudinales (30) s'étendent au-dessus de l'évaporateur (17).

12. Installation de chauffage et/ou de climatisation selon les revendications 6 et 8, caractérisée en ce que les parties de tuyau (35, 41, 42) des deux sorties (18, 19) sont formées par des tuyaux en matière plastique soufflée.

FIG.1

EP 0 353 412 B1

FIG.2

FIG.3

EP 0 353 412 B1

FIG.4

FIG.5

EP 0 353 412 B1